# EUROPEAN PATENT SPECIFICATION

(11) **EP 1 598 653 B1**
(45) Date of publication and mention of the grant of the patent: **17.02.2016**
(21) Application number: 05253104.3
(22) Date of filing: 19.05.2005
(51) Int. Cl.: G01M 7/04

(54) **Vibration testing apparatus and a method of vibration testing**
Vorrichtung und Verfahren zur Schwingungsprüfung
Dispositif et procédé d'essai de vibrations

(30) Priority: 21.05.2004 GB 0411446
(43) Date of publication of application: 23.11.2005
(73) Proprietor: BRUEL & KJAER VTS LIMITED, Herts, SG8 5BQ (DK)
(72) Inventor: Fletcher, Matthew David, Royston Hertfordshire SG8 7DF (GB)
(74) Representative: Guardian IP Consulting I/S

(56) References cited:
- US-A- 3 062 041
- US-A- 3 670 563
- US-A- 4 715 229
- US-B1- 6 443 013

## Description

### FIELD OF THE INVENTION

The present invention relates to a vibration testing apparatus, in particular a large diameter vibration testing apparatus and a method of vibration testing using this apparatus.

### BACKGROUND OF THE INVENTION

A vibration testing apparatus, sometimes known as a shaker, is employed in industry for the vibration testing of industrial elements and components. The object of such vibration testing apparatus is to expose scientific or industrial equipment to vibration of the frequency and amplitude to which that equipment may be exposed in normal use, to test the response of the equipment to the vibrations US 3,670,563 discloses a fixture for firmly supporting articles, such as electrical components and devices, during vibration testing of the articles.

The present invention is particularly concerned with the vibration testing of satellites. These satellites are typically exposed to very severe vibrations during launch. These vibrations may have frequencies in the range 5-150 Hz.

A vibration testing apparatus is shown in US4489612. This includes an electromagnetic vibration generator which is mounted on a trunion which is arranged, in one configuration, to vibrate a slip plate in a horizontal plane. The slip plate is mounted on a massive support block through hydrostatic bearings. Hydrostatic bearings are employed because they give the lowest distortion and the highest stiffness to the bearing. US 4,715,229 discloses an electro-mechanical shaker apparatus including an armature frame which is directly coupled to an armature coil to form an integrated unit.

The electromagnetic vibration generator can also be mounted in a configuration in which the armature is oriented vertically and can supply vibration to an object mounted directly on the armature. Where the object is of a larger size than the armature, a so-called head expander maybe used, for example as disclosed in GB2211268.

In order to test the vibration modes of the equipment being tested in the frequency range desired, it is preferred to minimise vibration modes of the combination of the vibration testing apparatus and the equipment in this range.

It is normal to design the weight, dimensions and stiffness of various parts of the vibration testing apparatus so that this object is attained.

Vibration modes due to the vibration testing apparatus itself may include flexible vibration modes, for example due to the twisting of the plate. Normally, these vibration modes are of relatively high frequency, falling outside the testing frequency range. However, rigid vibration modes of the head expander, caused by rocking of the head expander within the support structure may be encountered. These may have a frequency which is lower than the flexible modes and may fall within the testing range.

This may be a problem particularly when the equipment being tested has very large dimensions, in particular extending for a large distance away from the expander or when the equipment being tested has a large mass.

Whereas it is known that placing the bearings further apart helps to increase the frequency of rigid vibration modes, this may not be possible because larger dimension mountings have increased mass and hence decreased rigid vibration modes or may be inadequately stiff and have decreased flexible vibration modes.

It is an object of the present invention to provide vibration-testing apparatus in which the amplitude and/or frequency or vibration modes of the combination of the equipment being tested and the vibration testing apparatus can be improved.

### SUMMARY OF THE INVENTION

The present invention provides vibration testing apparatus comprising a support, at least one electromagnetic vibration generator mounted on the support, a mounting for mounting equipment to be tested, the mounting being drivable by the electromagnetic vibration generator, wherein the mounting comprises an annular body supported by at least one bearing on the support.

The present invention further provides a method of vibration testing comprising mounting equipment to be tested on a mounting, the mounting being drivable in vibrational modes by at least one electromagnetic vibration generator, the electromagnetic vibration generator being mounted on a support, the mounting comprising an annular body supported by at least one bearing on the support.

The present inventor has realised that many types of equipment to be tested, in particular satellites, are constructed using a ring. That is, the interface between the equipment to be tested and the mounting is annular.

Accordingly, the present inventor has realised that there is no requirement for a mounting structure within the interior of the annulus. There is no requirement for complete area support of the equipment being tested. This in turn allows the mounting to be constructed relatively lightly but with adequate stiffness.

### PREFERRED FEATURES OF THE INVENTION

The present invention comprises a support. The support is preferably of a very large mass, or fixable to a structure of very large mass, to provide a stable support for the equipment being tested. For example, the support may have a mass which is at least three times the mass of the equipment of being tested and preferably at least five times the mass of the equipment being tested.

The support preferably does not have any substantial vibration modes in the frequency range being tested.

According to the present invention there is preferably at least one electromagnetic vibration generator. Vibration generators for generating vibrations in the frequency range required are commonly available and are described for example in British patent application No. 2385470 or British patent application no. 2217521.

The electromagnetic vibration generator is mounted on the support in a manner which is known in the art. There may be one, two, three or four vibration generators or, in some cases, more.

According to the invention, the mounting comprises an annular body supported by bearings. By 'annular' it is meant that any parts within the annulus preferably comprise less than 10% of the total weight of the body. Preferably, the mounting consists essentially of an annular body, with substantially no parts within the annulus. In this way, the weight and the strength of the body may be concentrated in the annular region. Accordingly, a mounting which is capable of supporting an annular apparatus to be tested can be provided which has a relatively low mass and a relatively high diameter, so that static vibration modes have a relatively high frequency.

Preferably, the outer diameter of the annular body is at least one metre, preferably at least two metres.

Preferably, the annular body is relatively narrow in the radial direction, having a radial extent of less than 0.5 metres, preferably less than 0.2 metres and most preferably less than 0.1 metres.

The radial extent of the annular body should be selected in order to minimise the generation of vibrations having a frequency within the testing range which are due to flexible buckling modes of the annular body.

The mounting is preferably relatively long in its axial direction, having a depth which is greater than or equal to 0.5 times its diameter, preferably greater than or equal to 0.75 times its diameter. This allows the structure to be relatively stiff.

It is particularly advantageous to have an annular body which is less than 0.1 metres in radial extent but greater than equal 0.7 times its diameter in height.

The annular body is preferably made of a material with a suitable combination of lightness and strength, for example, magnesium alloy, aluminium alloy or any other suitable material.

The annular body need not be solid. It may comprise at least one annular wall provided with radially extending strengthening ribs or webs. There may be at least two circumferentially extending walls joined by radially extending ribs.

Suitably, the mounting comprises an annular body connected at one end to an annular head expander. The head expander is provided to increase the contact width at the end of the annular body. For example, the radial extent of the annular head expander may be up to 0.5 metres and preferably up to 0.2 metres. It may be at least three or at least four times the radial extent of the annular body.

The head expander preferably is comprised of material having a relatively low mass but high strength, for example magnesium or aluminium alloy.

At least one bearing is provided for mounting the annular body in the support. Preferably, there are a plurality of bearings. The bearings are preferably located around the periphery of the annular body. Typically, they are mounted at the top and bottom of the annular body considered in the axial direction. Bearings may be mounted on the inner or outer periphery of the annular body. In a particularly preferred embodiment, bearings are mounted on both inner and outer peripheries of the annular body.

The bearing comprises a hydrostatic bearing. This gives very low distortion and high stiffness. This serves to increase the rigid body modes of the annular body.

In a vibration testing apparatus, it is, as noted above, highly desirable to make the mounting as stiff as possible in at least one direction, in order to resist formation of relatively low frequency rigid modes. According to the present invention, the bearing provides flexibility at least one direction, for transmission of vibrations. The bearing is preferably configured to provide flexibility in the radial direction, being substantially unconstrained in the axial direction and stiff in the tangential direction. By providing flexibility in the radial direction, problems due to thermal expansion can be overcome. Preferably, the bearing does not constrain the mounting in the axial direction. That is, any vibration modes in the axial direction preferably have a frequency which is below the frequency range of interest. In practice, the weight of the equipment being tested and the mounting will be supported by the vibration generator or generators. In this way, the mounting is effectively completely free in the drive direction, so that vibration frequency of the mounting is entirely determined by the operating frequency of the vibration generator.

According to the invention, the bearing comprise a bearing arm, mounted at one end to the support or to the annular body and at the other end to a bearing, the bearing arm being resiliently flexible in a radial direction but being stiff in the tangential direction. For example, the bearing arm may extend in a substantially tangential direction.

The bearing comprises a bearing shaft rotatably mounted in a bearing receiver, the shaft being axially displaceable within the bearing receiver. The shaft may be connected to one of the mounting or the support and the bearing receiver connected to the other of the mounting or support. In this way, the bearing assembly is unconstrained in the axial direction of the shaft. If the axial direction of the shaft is aligned with the axial direction of the annular body, the annular body is unconstrained in the axial direction.

According to the method of the invention, equipment to be tested is mounted on to the mounting, for example by fixing to the head expander. The equipment to be tested may be rigidly fixed to the mounting, to ensure good transfer of vibrational forces.

The electromagnetic vibration generators can then be used to generate vibrational forces which are transferred through the mounting to the equipment to be tested.

There has thus been outlined, in broad terms, the more important features of the invention in order that the detailed description thereof that follows may be better understood and in order that the present contribution to the art may be better appreciated. There are of course additional features of the invention that will be described below and which will form the subject matter of the invention.

In this respect, before explaining at least one embodiment of the invention in detail, it is to be understood that the invention is not limited in its application to the arrangements of the components set forth in the following description or illustrated in the drawings. The invention is capable of other embodiments and can be practised and carried out in various ways. Also it is to be understood that the phraseology and terminology employed herein as well as the abstract, are for the purpose of the description and should not be regarded as limiting.

As such, those skilled in the art will appreciate that the conception upon which this disclosure is based may readily be utilised as a basis for the designing of other structures, and methods for carrying out several purposes of the present invention.

### BRIEF DESCRIPTION OF THE DRAWINGS

The present invention will be further described by way of example with reference to the accompanying drawings, in which:
Figure 1 is a sketch cross section through a vibration testing apparatus according to the present invention.
Figure 2 is a sketch isometric view of the annular body of a mounting used in the vibration testing apparatus of figure 1, with one set of bearings illustrated.
Figure 3 is a partial sketch cross sectional view along line III-III of figure 1.
Figure 4 is a partial illustration, at enlarged scale, of one of the bearings shown in figure 3.
Figure 5 is sketch partial isometric view, at enlarged scale, of part of the bearing shown in figure 4.

### DESCRIPTION OF PREFERRED EMBODIMENT

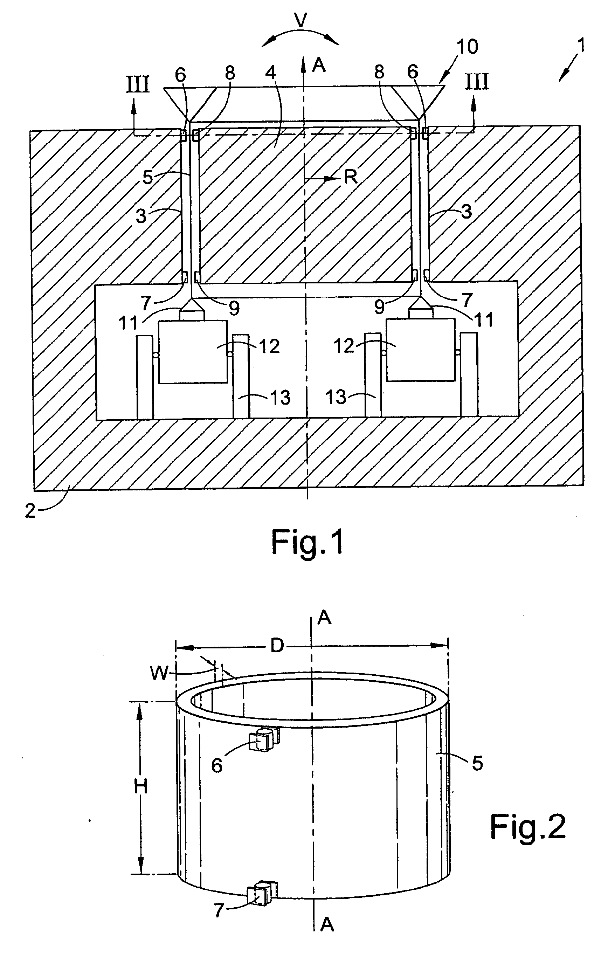

Figure 1 is a sketch cross sectional view through the vibration testing apparatus according to the present invention, generally designated 1.
The vibration testing apparatus 1 comprises a rigid support 2, formed of a rigid, massive material, for example cast metal such as cast steel. The support 2 includes an annular face 3 facing an annular space, in which is mounted an annular body 5 which will be described further below.

The support further comprises an inner body 4 in the form of a cylindrical section, which is supported by structures which are not shown and which is provided to support the annular body 5 on the inside.

The annular body 5 is mounted to the support on its outer surface at the top by bearings 6 and at the bottom by bearings 7. It is mounted to the inner body 4 at its inner surface by bearings 8 at the top and bearings 9 at the bottom.

At the top, the annular body 5 is connected to an annular head expander 10.

Together, the annular body 5 and the head expander 10 form a mounting for an annular piece of equipment to be tested (not shown). They may each be made of light magnesium alloy, for a combination of strength and lightness.

The annular body 5 is connected at the bottom to armatures 11 of electromagnetic vibration generators 12. Any number of electromagnetic vibration generators 12 may be used. Two are shown, but three or four may be used instead.

The electromagnetic vibration generators are each mounted on support structures 13 which are themselves rigidly mounted in the support 2.

Any suitable design of vibration generator 12 may be used, for example as described in GB2217521.

Each of the bearings 6, 7, 8 and 9 comprise hydrostatic bearings. Sources of pressurised bearing fluid (not shown) will be provided in a manner known in the art.

In figure 1, the arrow R denotes the radial direction. Arrow A denotes the axial direction. The curved arrow V denotes a rocking direction of rigid vibrational modes of equipment to be tested mounted on the head expander 10. It is desired in the invention to reduce the amplitude and/or increase the frequency of vibrational modes in the direction V whilst allowing the apparatus to be relatively flexible in the radial direction R so that vibrational forces can be transmitted from the generators 12 to the equipment to be tested.

Figure 2 is a sketch isometric view of the annular body 5 of figure 1. It can be seen that it comprises an annular body 5 of diameter D which is in the range 1-3.0 metres and a height H, in the axial direction A, of about 3.0 metres. The radial extent or width W of the annular body will be selected to give adequate stiffness so that there are substantially no flexing vibration modes in the frequency range of interest (5-150 Hz). In this case, the radial width W is of the order of 0.1 metres.

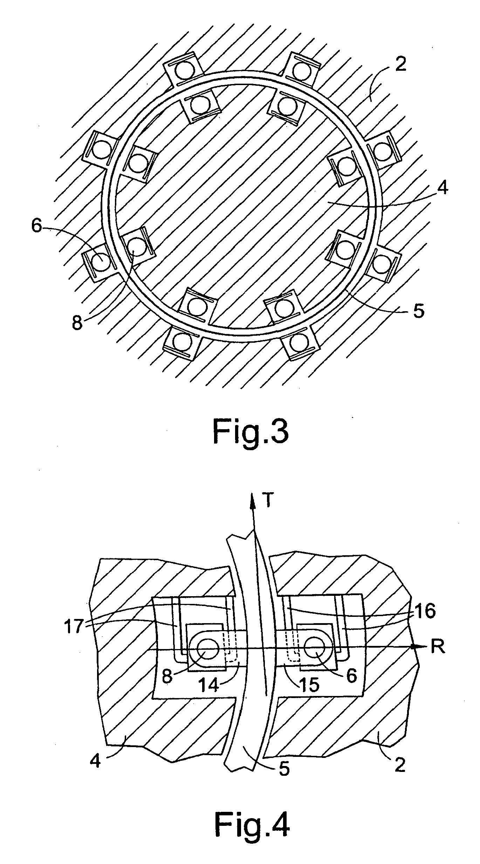

One set of bearings 6, 7 is shown schematically on the outer face of the annular member 5. In practice, as will be clear in figure 3, many more sets of bearings will be provided.

In figure 3, eight sets of bearings are schematically shown, but in practice many more may be used if necessary. They are placed at regular angular intervals around the periphery of the annular member 5. A sufficient number of bearings will be provided in order to give good stiffness.

Figure 4 is a part cross sectional view of one of the bearing sets. Each of the bearing sets comprises hydrostatic bearings 6 and 8 of known design. Each is mounted to the annular body 5 by a short, rigid arm 14 or 15 respectively. These arms 14 and 15 have substantially no vibrational modes in the frequency range of interest.

However, the bearings 6 and 8 are each mounted to the respective part of the support 2, 4 by a bearing arm 16, 17 respectively. The bearing arms 16 and 17 are designed so that they are rigid in the tangential direction T but are relatively flexible in the radial direction R. Further, the bearing 6 and 8 are designed so that annular body 5 is substantially unconstrained in the axial direction A so that vibrational forces can be transmitted from the electromagnetic vibration generators 12 through the annular body 5 and the head expander 10 to equipment to be tested.

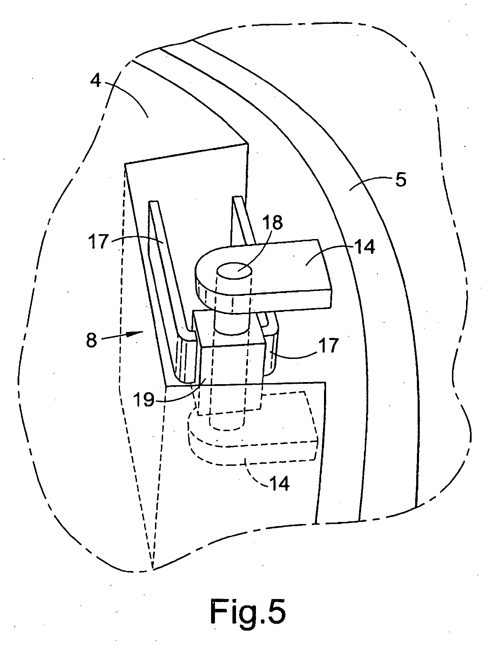

Figure 5 is a partial sketch isometric view of the bearing shown in figure 4. Only the bearing 8 is shown. The bearing 6 is not shown, for clarity. It can be seen that the bearing comprises a pair of rigid arms 14 and a pair of rigid arms 17 as described in relation to figure 4. A shaft 18, which extends in the axial direction A extends between the arms 14 and is received in a bearing receiver 19 which is mounted on the other pair of arms 17. The shaft 18 is axially slidable within the bearing receiver 19, so that the annular body 5 is axially unconstrained by the bearing 8, within the limits imposed by the arms 14. The whole weight of the mounting and the equipment to be tested is then taken by the vibration generators 12. This design of bearing also allows the effect of thermal expansion to be accommodated.

The clearances permitted by hydrostatic bearings 6, 8 are very small. This can give problems due to thermal expansion or due to differential loading of the annular ring 5 by equipment to be tested. However, the flexible support for the bearings 6, 8 allows such variations to be taken up without causing the bearings to jam.

The many features and advantages of the invention are apparent from the detailed description of the embodiment above. Further, since numerous modifications and variations will readily occur to those skilled in the art, it is not desired to limit the invention to the exact construction and operation illustrated and described and accordingly, all suitable modifications and equivalents may be resorted to, falling within the scope of the invention.

## Claims

1. A vibration testing apparatus, comprising:
a support (2);
at least one electromagnetic vibration generator (12) mounted on the support;
a mounting (5, 10) drivable by the at least one electromagnetic vibration generator;
wherein the mounting comprises an annular body (5) supported on the support by at least one bearing;
**characterized in that** said bearings comprise hydrostatic bearings comprising bearing arms (16, 17) extending generally in a tangential direction of the annular body; and a bearing shaft (18) having a bearing axis which is aligned with the axis of the annular body, the bearing shaft being received in a bearing receiver (19) so that the bearing shaft is displacable along its axis within the bearing receiver, so that the annular body is substantially unconstrained in its axial direction.

2. The vibration testing apparatus according to claim 1, wherein the outer diameter of the annular body is at least 1.0m, and preferably at least 2.0m.

3. A vibration testing apparatus according to claim 1 or 2, wherein the radial extent of the annular body is in the range less than 0.5m, preferably less than 0.2m and most preferably less than 0.1 m.

4. A vibration testing apparatus according to any preceding claim, wherein the mounting comprises an annular body and an expander head.

5. A vibration testing apparatus according to any preceding claim, wherein the annular body has a height which is preferably greater than or equal to at least 0.5 times the diameter of the annular body, preferably at least 0.7 times the diameter and preferably one times the diameter of the annular body.

6. The vibration testing apparatus according to any preceding claim, wherein bearings (8, 9) are mounted at the top and bottom of the annular body.

7. The vibration testing apparatus according to any preceding claim, wherein bearings are mounted on the inside and the outside of the annular body.

8. A vibration testing apparatus according to any preceding claim, comprising at least two electromagnetic vibration generators, preferably at least 3 and preferably at least 4 electromagnetic vibration generators.

9. A vibration testing apparatus according to any preceding claim, wherein the mounting is composed of magnesium alloy.

10. A method of vibration testing, comprising mounting equipment to be tested on a mounting (5, 10), **characterized by** said mounting being driven in vibrational modes by at least one electromagnetic vibration generator (12), the electromagnetic vibration generator being mounted on a support (2), the mounting comprising an annular body (5) supported by at least one bearing (6, 7) on the support; wherein the bearings comprise hydrostatic bearings comprising bearing arms (16, 17) extending generally in a tangential direction of the annular body; and a bearing shaft (18) having a bearing axis which is aligned with the axis of the annular body, the bearing shaft being received in a bearing receiver (19) so that the bearing shaft is displacable along its axis within the bearing receiver, so that the annular body is substantially unconstrained in its axial direction.

11. A method of vibration testing according to claim 10, wherein the equipment to be tested is fixed to the mounting.

12. A method of vibration testing according to claim 11, wherein the equipment to be tested is fixed to an expander head (10).

13. A method of vibration testing according to any claims 10 to 12, wherein the electromagnetic vibration generator is used to generate vibrations having frequencies in the range 5-150Hz.

14. A method of vibration testing according to any of claims 10 to 13, wherein the mounting is vibrated along its axis, the bearing being relatively flexible in the radial direction and relatively stiff in the tangential direction.

## Patentansprüche

1. Vibrationstestgerät, das:
einen Träger (2);
wenigstens einen elektromagnetischen Vibrationsgenerator (12), der auf dem Träger montiert ist;
eine Aufhängung (5, 10), die durch wenigstens einen elektrischen Vibrationsgenerator antreibbar ist, umfasst,
wobei die Aufhängung einen ringförmigen Körper (5) umfasst, der auf dem Träger durch wenigstens ein Lager getragen ist;
**dadurch gekennzeichnet, dass** die genannten Lager hydrostatische Lager umfassen, die Lagerarme (16, 17), die sich im Allgemeinen in einer tangentialen Richtung des ringförmigen Körpers erstrecken; und eine Lagerwelle (18) mit einer Lagerachse umfassen, die mit der Achse des ringförmigen Körpers gefluchtet ist, wobei die Lagerwelle in einer Lageraufnahme (19) derart aufgenommen ist, dass die Lagerwelle entlang ihrer Achse innerhalb der Lageraufnahme derart verschiebbar ist, dass der ringförmige Körper im Wesentlichen spannungslos in seiner axialen Richtung ist.

2. Vibrationstestgerät gemäß Anspruch 1, bei dem der Außendurchmesser des ringförmigen Körpers wenigstens 1,0 m und bevorzugt wenigstens 2,0 m beträgt.

3. Vibrationstestgerät gemäß Anspruch 1 oder 2, bei dem sich die radiale Ausdehnung des ringförmigen Körpers in dem Bereich von weniger als 0,5 m, bevorzugt weniger als 0,2 m und weiter bevorzugt weniger als 0,1 m befindet.

4. Vibrationstestgerät gemäß einem der voranstehenden Ansprüche, bei dem die Aufhängung einen ringförmigen Körper und einen Dehnungskopf umfasst.

5. Vibrationstestgerät gemäß einem der voranstehenden Ansprüche, bei dem der ringförmige Körper eine Höhe hat, die bevorzugt größer ist als oder gleich wenigstens des 0,5-fachen Durchmessers des ringförmigen Körpers, bevorzugt wenigstens des 0,7-fachen des Durchmessers und bevorzugt des Einfachen des Durchmessers des ringförmigen Körpers.

6. Vibrationstestgerät gemäß einem der voranstehenden Ansprüche, bei dem die Lager (8, 9) an der Ober- und Unterseite des ringförmigen Körpers montiert sind.

7. Vibrationstestgerät gemäß einem der voranstehenden Ansprüche, bei dem die Lager auf der Innenseite und der Außenseite des ringförmigen Körpers montiert sind.

8. Vibrationstestgerät gemäß einem der voranstehenden Ansprüche, umfassend wenigstens zwei elektromagnetische Vibrationsgeneratoren, bevorzugt wenigstens 3 und bevorzugt wenigstens 4 elektromagnetische Vibrationsgeneratoren.

9. Vibrationstestgerät gemäß einem der voranstehenden Ansprüche, bei dem die Aufhängung aus einer Magnesiumlegierung zusammengesetzt ist.

10. Vibrationstestverfahren, umfassend eine auf einer Aufhängung (5, 10) zu testenden Aufhängungsausrüstung, **dadurch gekennzeichnet, dass** die genannte Aufhängung in Vibrationsmodi durch wenigstens einen elektromagnetischen Vibrationsgenerator (12) angetrieben ist, wobei der genannte elektromagnetische Vibrationsgenerator auf einem Träger (2) montiert ist, wobei die Aufhängung einen ringförmigen Körper (5) umfasst, der durch wenigstens ein Lager (6, 7) auf dem Träger getragen ist; wobei die Lager hydrostatische Lager umfassen, die Lagerarme (16, 17) umfassen, die sich im Allgemeinen in einer tangentialen Richtung des ringförmigen Körpers erstrecken; und eine Lagerwelle (18) mit einer Lagerachse, die mit der Achse des ringförmigen Körpers gefluchtet ist, wobei die Lagerachse in einer Lageraufnahme (19) derart aufgenommen ist, dass die Lagerachse entlang ihrer Achse innerhalb der Lageraufnahme derart verschiebbar ist, dass der ringförmige Körper im Wesentlichen in seiner axialen Richtung spannungslos ist.

11. Vibrationstestverfahren gemäß Anspruch 10, bei dem die zu testende Ausrüstung auf der Aufhängung befestigt ist.

12. Vibrationstestverfahren gemäß Anspruch 11, bei dem die zu testende Ausrüstung auf einem Dehnungskopf (10) befestigt ist.

13. Vibrationstestverfahren gemäß Anspruch 10 bis 12, bei dem der elektromagnetische Vibrationsgenerator zum Generieren von Vibrationen mit Frequenzen im Bereich von 5 - 150 Hz verwendet wird.

14. Vibrationstestverfahren gemäß Anspruch 10 bis 13, bei dem die Aufhängung entlang ihrer Achse vibriert wird, wobei das Lager relativ flexibel in der radialen Richtung und relativ steif in der tangentialen Richtung ist.

## Revendications

1. Appareil de test par vibrations, comprenant :
un support (2) ;
au moins un générateur électromagnétique de vibrations (12) monté sur le support ;
un socle (5, 10) pouvant être entraîné par l'au moins un générateur électromagnétique de vibrations ;
dans lequel le socle comprend un corps annulaire (5) supporté sur le support par au moins un palier ;
**caractérisé en ce que** lesdits paliers comprennent des paliers hydrostatiques comprenant des bras porteurs (16, 17) s'étendant globalement dans une direction tangentielle du corps annulaire ; et un arbre porteur (18) ayant un axe de palier qui est aligné sur l'axe du corps annulaire, l'arbre porteur étant reçu dans un récepteur porteur (19) de sorte que l'arbre porteur peut être déplacé le long de son axe à l'intérieur du récepteur porteur, de sorte que le corps annulaire est sensiblement non contraint dans sa direction axiale.

2. Appareil de test par vibrations selon la revendication 1, dans lequel le diamètre extérieur du corps annulaire est d'au moins 1,0 m et de préférence d'au moins 2,0 m.

3. Appareil de test par vibrations selon la revendication 1 ou 2, dans lequel l'étendue radiale du corps annulaire est dans la plage inférieure à 0,5 m, de préférence inférieure à 0,2 m et le plus de préférence inférieure à 0,1 m.

4. Appareil de test par vibrations selon n'importe quelle revendication précédente, dans lequel le socle comprend un corps annulaire et une tête d'expanseur.

5. Appareil de test par vibrations selon n'importe quelle revendication précédente, dans lequel le corps annulaire a une hauteur qui est de préférence supérieure ou égale à au moins 0,5 fois le diamètre du corps annulaire, de préférence au moins 0,7 fois le diamètre et de préférence une fois le diamètre du corps annulaire.

6. Appareil de test par vibrations selon n'importe quelle revendication précédente, dans lequel des paliers (8, 9) sont montés au niveau du sommet et du fond du corps annulaire.

7. Appareil de test par vibrations selon n'importe quelle revendication précédente, dans lequel des paliers sont montés sur l'intérieur et l'extérieur du corps annulaire.

8. Appareil de test par vibrations selon n'importe quelle revendication précédente, comprenant au moins deux générateurs électromagnétiques de vibrations, de préférence au moins 3 et de préférence au moins 4 générateurs électromagnétiques de vibrations.

9. Appareil de test par vibrations selon n'importe quelle revendication précédente, dans lequel le socle est composé d'alliage de magnésium.

10. Procédé de test par vibrations, comprenant le montage d'un équipement à tester sur un socle (5, 10), **caractérisé en ce que** ledit socle est entraîné dans des modes de vibration par au moins un générateur électromagnétique de vibrations (12), le générateur électromagnétique de vibrations étant monté sur un support (2), le socle comprenant un corps annulaire (5) supporté par au moins un palier (6, 7) sur le support ; dans lequel les paliers comprennent des paliers hydrostatiques comprenant des bras porteurs (16, 17) s'étendant globalement dans une direction tangentielle du corps annulaire ; et un arbre porteur (18) ayant un axe de palier qui est aligné sur l'axe du corps annulaire, l'arbre porteur étant reçu dans un récepteur porteur (19) de sorte que l'arbre porteur peut être déplacé le long de son axe à l'intérieur du récepteur porteur, de sorte que le corps annulaire est sensiblement non contraint dans sa direction axiale.

11. Procédé de test par vibrations selon la revendication 10, dans lequel l'équipement à tester est fixé au socle.

12. Procédé de test par vibrations selon la revendication 11, dans lequel l'équipement à évaluer est fixé à une tête d'expanseur (10).

13. Procédé de test par vibrations selon n'importe laquelle des revendications 10 à 12, dans lequel le générateur électromagnétique de vibrations est utilisé pour produire des vibrations ayant des fréquences dans la plage de 5 à 150 Hz.

14. Procédé de test par vibrations selon n'importe laquelle des revendications 10 à 13, dans lequel le socle est vibré le long de son axe, le palier étant relativement souple dans la direction radiale et relativement raide dans la direction tangentielle.
